# EUROPEAN PATENT APPLICATION

(11) **EP 4 434 883 A1**
(43) Date of publication of application: **25.09.2024**
(21) Application number: 24165115.7
(22) Date of filing: 21.03.2024
(51) Int. Cl.: B64D 9/00

(54) **CONDITION MONITORING OF TIRES OF A POWER DRIVE UNIT FOR AEROSPACE CARGO SYSTEMS**

(30) Priority: 22.03.2023 US 202318188330
(71) Applicant: Goodrich Corporation, Charlotte, NC 28217-4578 (US)
(72) Inventor: CHEN, Yan, South Windsor, 06074 (US); CHAUDHRY, Zaffir A., S. Glastonbury, 06073 (US); HARMS, Scott, Ypsilanti, 58497 (US)
(74) Representative: Dehns

(57) **Abstract**

A power drive unit (110a) for a cargo handling system is provided. The power drive unit includes a drive roller (108a); a motor configured to rotate the drive roller; a housing (143) configured to house the motor; a sensor (304, 306) configured to monitor a characteristic associated with one or more of the housing or the motor; and a controller (308) configured to receive an output from the sensor and output an electric alert signal in response to the characteristic.

## Description

### FIELD

The present disclosure relates generally to cargo handling systems and, more particularly, to condition monitoring of tires of a power drive unit (PDU) for aerospace cargo systems.

### BACKGROUND

Conventional aircraft cargo systems typically include various tracks and rollers that span the length of an aircraft. Cargo may be loaded from an aft position on an aircraft and conducted by the cargo system to a forward position and/or, depending upon aircraft configuration, cargo may be loaded from a forward position on an aircraft and conducted by the cargo system to an aft position. Cargo systems, such as those used by aircraft for transport of heavy containerized cargo or pallets, also referred to as unit load devices (ULDs), typically include roller trays containing transport rollers which support the cargo. Motor driven rollers are typically employed in these systems. Aircraft often employ a series of motor driven power drive units (PDUs) to propel cargo containers and pallets within the aircraft cargo compartment. This configuration may allow for the transportation of cargo pallets within the aircraft cargo compartment by one or more operators controlling the PDUs.

### SUMMARY

A power drive unit for a cargo handling system is disclosed herein. The power drive unit includes: a drive roller; a motor configured to rotate the drive roller; a housing configured to house the motor; a sensor configured to monitor a characteristic associated with at least one of the housing or the motor; and a controller configured to receive an output from the sensor and output an electric alert signal in response to the characteristic.

In various embodiments, the sensor is an electrical current sensor and the electrical current sensor monitors electric current utilized by the motor while driving cargo via the drive roller. In various embodiments, the characteristic is electrical current utilized by the motor when driving cargo via the drive roller. In various embodiments, the electric alert signal is issued in response to the electrical current exceeding a predetermined threshold.

In various embodiments, the sensor is an accelerometer and the accelerometer monitors vibrations of the housing due to cargo being driven by the drive roller. In various embodiments, the characteristic is an amplitude of vibrations of the housing due to cargo being driven by the drive roller. In various embodiments, the electric alert signal is issued in response to the amplitude of the vibrations exceeding a predetermined threshold. In various embodiments, the electric alert signal provides an indication a damaged tire on the drive roller.

Also disclosed herein is a cargo handling system. The cargo handling system includes: a roller tray; and a power drive unit located in the roller tray. The power drive unit includes: a drive roller; a motor configured to rotate the drive roller; a housing configured to house the motor; a sensor configured to monitor a characteristic associated with at least one of the housing or the motor; and a controller configured to receive an output from the sensor and output an electric alert signal in response to the characteristic.

In various embodiments, the sensor is an electrical current sensor and the electrical current sensor monitors electric current utilized by the motor while driving cargo via the drive roller. In various embodiments, the characteristic is electrical current utilized by the motor when driving cargo via the drive roller. In various embodiments, the electric alert signal is issued in response to the electrical current exceeding a predetermined threshold.

In various embodiments, the sensor is an accelerometer and the accelerometer monitors vibrations of the housing due to cargo being driven by the drive roller. In various embodiments, the characteristic is an amplitude of vibrations of the housing due to cargo being driven by the drive roller. In various embodiments, the electric alert signal is issued in response to the amplitude of the vibrations exceeding a predetermined threshold. In various embodiments, the electric alert signal provides an indication a damaged tire on the drive roller.

Also disclosed herein is a method for monitoring tire degradation of a power drive unit. The method includes: receiving, by a controller, a characteristic sensed by a sensor, where the characteristic is associated with at least one of a housing of the power drive unit or a motor housed within the power drive unit; analyzing, by the controller, the characteristic to determine whether the characteristic exceeds a predetermined threshold; and, responsive to the characteristic exceeding the predetermined threshold, issuing, by the controller, an electric alert signal indicating damaged to a tire on a drive roller of the power drive unit.

In various embodiments, the sensor is an electrical current sensor and the electrical current sensor monitors electric current utilized by the motor while driving cargo via the drive roller. In various embodiments, the sensor is an accelerometer and the accelerometer monitors vibrations of the housing due to cargo being driven by the drive roller. In various embodiments, the characteristic is either electrical current utilized by the motor when driving cargo via the drive roller or an amplitude of vibrations of the housing due to the cargo being driven by the drive roller and the electric alert signal is issued in response to either the electrical current exceeding the predetermined threshold or the amplitude of the vibrations exceeding the predetermined threshold.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1A illustrates an aircraft being loaded with cargo, in accordance with various embodiments.
FIG. 1B illustrates a portion of a cargo handling system, in accordance with various embodiments.
FIGS. 2A and 2B illustrate a roller tray of a cargo handling system, in accordance with various embodiments.
FIG. 3 illustrates a schematic view of a first PDU to drive cargo, in accordance with an illustrative embodiment.
FIG. 4 illustrates a graph indicating tire stiffness due to minimal damage and sever damage, in accordance with an illustrative embodiment.
FIG. 5 illustrates a controller, in accordance with an illustrative embodiment.
FIG. 6 illustrates a graph illustrating electrical current values utilized by a drive roller over time, in accordance with an illustrative embodiment.
FIG. 7 illustrates a graph illustrating vibrations values of a first PDU caused by a rotation of a drive roller over time, in accordance with an illustrative embodiment.
FIG. 8 illustrates a method for monitoring tire degradation of a power drive unit in accordance with various embodiments.

### DETAILED DESCRIPTION

The detailed description of embodiments herein makes reference to the accompanying drawings, which show embodiments by way of illustration. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option. Further, any steps in a method discussed herein may be performed in any suitable order or combination.

Disclosed herein is a system for monitoring s condition of tires of a power drive unit (PDU) for aerospace cargo systems. Aircrafts often employ a series of motor driven power drive units (PDUs) to propel cargo containers and pallets within the aircraft cargo compartment. This configuration may allow for the transportation of cargo pallets within the aircraft cargo compartment by one or more operators controlling the PDUs. However, such PDUs in these cargo system may experience tire damage over time, which may lead to insufficient and unbalanced traction. Typically, visual inspection is the only way to assess the tire integrity, which is costly and sometime unreliable. In order to assess the tire integrity in addition or in lieu of visual inspection, in various embodiments, tire integrity may be assessed using motor current prognostics and health management (PHM). In order to assess the tire integrity in addition or in replace of visual inspection, in various embodiments, tire integrity may be assessed using vibration-based PHM. In various embodiments, monitoring tire integrity based on motor current and/or vibration enables self-diagnostics to detect tire degradation and evaluate the severity of damage. In various embodiments, once the tire damage exceeds a predefined threshold, an electric alert signal may be issued to cargo control system in order that maintenance may be scheduled in advance to address the damaged tire(s).

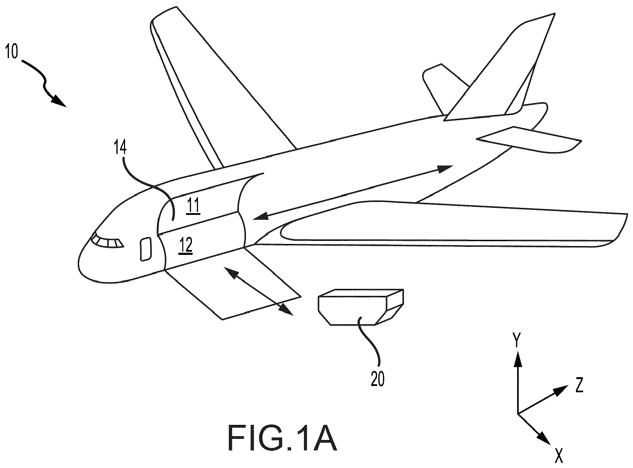

Referring now to FIG. 1A, an aircraft 10 having a cargo deck 12 is illustrated, in accordance with various embodiments. Aircraft 10 may include a cargo load door 14, for example, at a side of the fuselage structure of the aircraft 10. Cargo 20 may be loaded through cargo load door 14 and onto cargo deck 12 of aircraft 10 or unloaded from the cargo deck 12 of the aircraft 10.

Items to be shipped by air, freight, and/or the like are typically loaded first onto specially configured pallets or into specially configured containers. In aviation, those various pallets and/or containers are commonly referred to as unit load devices (ULDs). ULDs are available in various sizes and capacities and are typically standardized in dimension and shape. In various embodiments, cargo 20 may be a ULD. Once loaded, the ULD is transferred to the aircraft, and is loaded onto the aircraft 10 through the cargo load door 14 using a conveyor ramp, scissor lift, or the like. Once inside the aircraft 10, the ULD is moved within the cargo hold to its final stowage position. Multiple ULDs may be brought on-board the aircraft, with each ULD being placed in its respective stowage and transportation position in on cargo deck 12. After the aircraft 10 has reached its destination, the ULDs are unloaded from the aircraft 10 similarly, but in reverse sequence to the loading procedure. To facilitate movement of cargo 20 along the cargo deck 12, aircraft 10 may include a cargo handling system 100 as described herein in accordance with various embodiments.

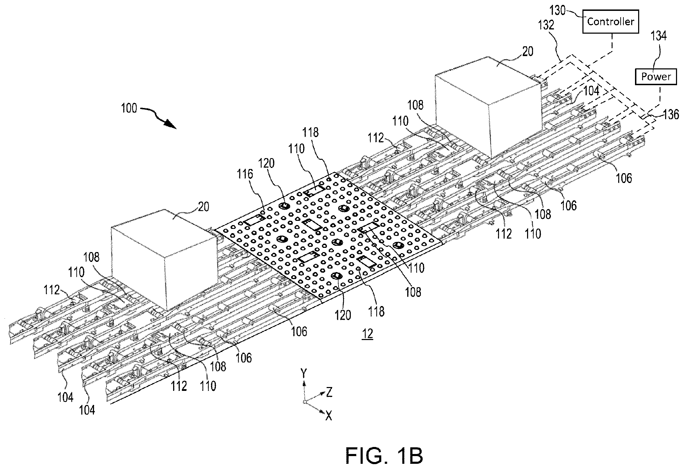

Referring now to FIG. 1B, a portion of cargo deck 12 is illustrated with XYZ axes for ease of illustration, in accordance with various embodiments. Cargo deck 12 includes cargo handling system 100. Cargo handling system may include one or more ball panels 116 and one or more roller trays 104. Ball panels 116 may include a plurality of freely rotating conveyance balls 118. Roller trays 104 include a plurality of freely rotating conveyance rollers 106. Roller trays 104 may be positioned longitudinally along cargo deck 12. In various embodiments, a number of PDUs 110 may be mounted along cargo deck 12. For example, PDUs 110 may be located in ball panels 116 and/or in roller trays 104. PDUs 110 are configured to propel cargo over conveyance balls 118 and conveyance rollers 106 and across cargo deck 12.

PDUs 110 include one or more drive rollers 108, which may be actively controlled by a motor. PDUs 110, including drive rollers 108, provide a mechanism upon which cargo 20 is propelled over the conveyance rollers 106. The cargo 20 may contact the drive rollers 108 of PDUs 110 located within the roller trays 104 to provide motive force for the cargo 20. In various embodiments, an outer braking rubber layer (i.e., the tire) on the drive roller 108 may wear overtime leading to developing a flat or worn spot that may cause insufficient and unbalanced traction for the cargo 20. Each of PDUs 110 may include an actuator, such as an electrically operated motor, which drives one or more drive rollers 108. In various embodiments, a drive roller 108 may be raised by a PDU of PDUs 110 from a lowered position beneath the conveyance surface 102 to an elevated position above conveyance surface 102. As used with respect to cargo handling system 100, the term "beneath" may refer to the negative y-direction, and the term "above" may refer to the positive y-direction with respect to the provided XYZ axes. In the elevated position, a drive roller 108 contacts and drives the overlying cargo 20 that rides on the conveyance rollers 106. In accordance with various embodiments, the drive roller 108 may be held or biased in a position above the conveyance surface by a spring.

In various embodiments, a number of brake rollers 112 may be located along cargo deck 18. For example, brake rollers 112 may be mounted in roller trays 104. In various embodiments, one or more brake caster(s) 120 may be coupled to ball panel 116. Stated differently, ball panel 116 may include brake caster(s) 120. Brake caster 120 may be configured to swivel (or rotate) relative to ball panel 116, thereby by allowing brake caster 120 to align with the direction of movement of cargo 20 over ball panel 116. In various embodiments, brake rollers 112 and brake casters 120 are configured to rotate freely in a first circumferential direction and restrict rotation in the opposite circumferential direction. In this regard, brake rollers 112 and brake casters 120 may slow or prevent translation of cargo across cargo deck 12 in certain directions.

Cargo handling system 100 may include a controller 130 in communication with the PDUs 110 via a plurality of channels 132. Channel 132 may be a data bus, such as a controller area network (CAN) bus and may include one or more CAN busses or multi-CANs. An operator may selectively control operation of PDUs 110 using controller 130. Controller 130 may be configured to activate and/or deactivate the various PDUs 110 of cargo handling system 100. Thus, cargo handling system 100 may receive operator input through controller 130 to control PDUs 110 to manipulate cargo 20 into a desired position on cargo deck 12. Controller 130 may include a general-purpose processor, a digital signal processor (DSP), an application specific integrated circuit (ASIC), a field programmable gate array (FPGA) or other programmable logic device, discrete gate or transistor logic, discrete hardware components, or any combination thereof.

System program instructions and/or controller instructions may be loaded onto a tangible, non-transitory, computer-readable medium (also referred to herein as a tangible, non-transitory, memory) having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals *per se.*

The cargo handling system 100 may also include a power source 134 configured to supply power to the PDUs 110, brake rollers 112, and/or other components of cargo handling system 100 via one or more power busses 136. As described below, in various embodiments, the controller 130 may be complimented by or substituted with one or more local controllers, whereby control of each PDU or groups of PDUs is performed by individual local controllers configured to communicate with one another.

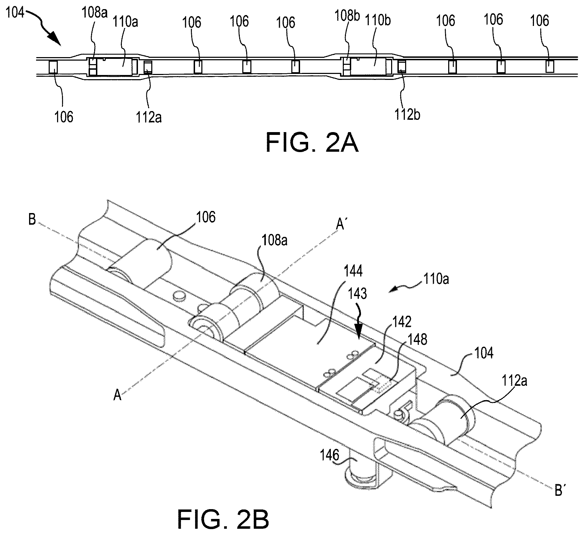

Referring now to FIG. 2A, a roller tray 104 is illustrated, in accordance with various embodiments. In various embodiments, a first PDU 110a and a second PDU 110b are located in roller tray 104. A first brake roller 112a and a second brake roller 112b are also located in roller tray 104. A plurality of conveyance rollers 106 may also be located in roller tray 104.

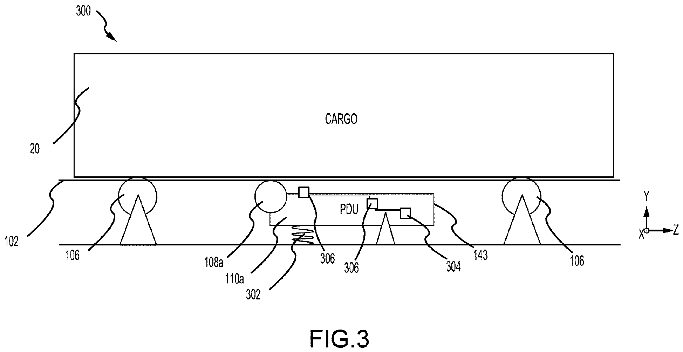

Referring now to FIG. 2B, additional details of first PDU 110a are illustrated, in accordance with various embodiments. While FIG. 2B and FIG. 3 show details of first PDU 110a, it is contemplated and understood that the other PDUs 110 of cargo handling system 100 include the features and functionalities as described herein with reference to first PDU 110a. In various embodiments, first PDU 110a may include a PDU controller 142 and a motor 144 housed within a housing 143, a connector 146 coupled to the housing 143, and one or more drive rollers 108a adjacent to the housing 143. In various embodiments, the first PDU 110a is mounted within roller tray 104. Drive roller 108a may include a cylindrical wheel coupled to drive shaft and configured to rotate about an axis A-A'. Drive roller 108a may be in mechanical communication with the motor 144, which may be, for example, an electromagnetic, electromechanical, or electrohydraulic actuator or other servomechanism. First PDU 110a may further include gear assemblies and other related components for turning and/or raising drive roller 108a so that drive roller 108a may be positioned above the cargo deck 12 to contact the bottom of cargo 20 of FIGS. 1A and 1B.

First PDU 110a may rotate drive roller 108a in one of two possible directions (i.e., forward or reverse) to propel cargo 20 in a direction parallel to a longitudinal axis B-B' of roller tray 104. PDU controller 142 may include a processor and a tangible, non-transitory memory. The PDU processor may include one or more logic modules that implement logic to control one or more drive roller 108a. In various embodiments, first PDU 110a may include other electrical devices to implement drive logic. Connector 146 may be an electrical connector for coupling the electronics of first PDU 110a to a power source and a control source, such as controller 130 and power source 134 in FIG. 2. Connector 146 may have pins and/or slots and may be configured to couple to a wiring harness having pin programing. PDU controller 142 may be configured to receive commands from controller 130 through connector 146. First PDU 110a may receive and interpret commands to control motor 144. In various embodiments, PDU controller 142 may further include a radio frequency identification (RFID) reader 148 capable of detecting RFID data. RFID reader 148 may include a transmitter, a receiver and/or a transceiver that is configured to transmit and receive power and/or data.

Referring now to FIG. 3, a schematic view of a first PDU 110a to drive cargo 20 is illustrated, in accordance with various embodiments. In an elevated position, the drive roller 108a of the first PDU 110a contacts and drives the overlying cargo 20 that rides on the conveyance rollers 106. In that regard, in various embodiments, the drive roller 108a of the PDU 110a may be raised, i.e., in a positive y-direction, beneath the conveyance surface 102 to an elevated position above conveyance surface 102. As used with respect to cargo handling system 100, the term "beneath" may refer to the negative y-direction, and the term "above" may refer to the positive y-direction with respect to the provided XYZ axes. In accordance with various embodiments, the drive roller 108 may be held or biased in a position above the conveyance surface by a spring 302. In various embodiments, overtime, an outer braking rubber layer (i.e., the tire) on the drive roller 108 may wear, leading to developing a flat or worn spot that may cause insufficient and unbalanced traction for the cargo 20.

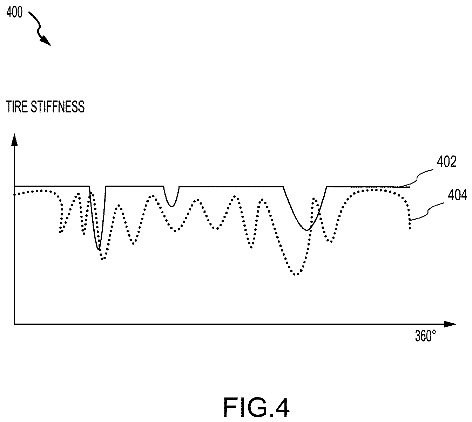

With temporary reference to FIG. 4 a graph indicating tire stiffness due to minimal damage and severe damage is illustrated, in accordance with various embodiments. In graph 400, the y-axis indicates tire stiffness, and the x-axis indicates the 360-degree rotation of tire of a drive roller, such as drive roller 108a of FIG. 3, in linear form. In various embodiment, solid line 402 indicates minimal damage to the tire stiffness, which may not reach a threshold indicating a flat or worn spot that may cause insufficient and unbalanced traction for the cargo 20. In contrast, dashed line 404 indicates severe damage to the tire stiffness, which may reach a threshold indicating a flat or worn spot causing insufficient and unbalanced traction for the cargo 20.

Returning to FIG. 3, in various embodiments, the first PDU 110a is further configured to include one or more sensors 304 and 306 and a controller 308 within housing 143. In various embodiments, sensor 304 may be an electrical current sensor, e.g. an electrical current transformer. In various embodiments, sensor 304 monitors the electrical current utilized an actuator, such as an electrically operated motor, which drives drive roller 108a. In various embodiment, the sensor 304, which may be electrically coupled to the controller 308, may be configured to provide the electrical current information to the controller 308. The controller 308 may include a logic device such as one or more of a central processing unit (CPU), an accelerated processing unit (APU), a digital signal processor (DSP), a field programmable gate array (FPGA), an application specific integrated circuit (ASIC), or the like. In various embodiments, the controller 308 may further include any non-transitory memory known in the art. The memory may store instructions usable by the logic device to perform operations as described herein.

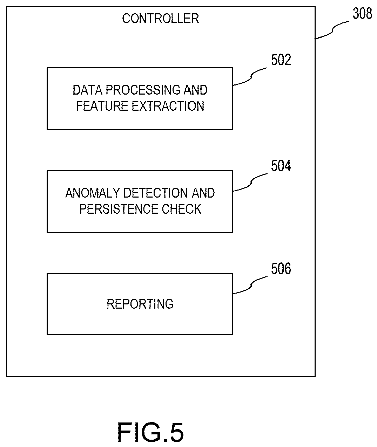

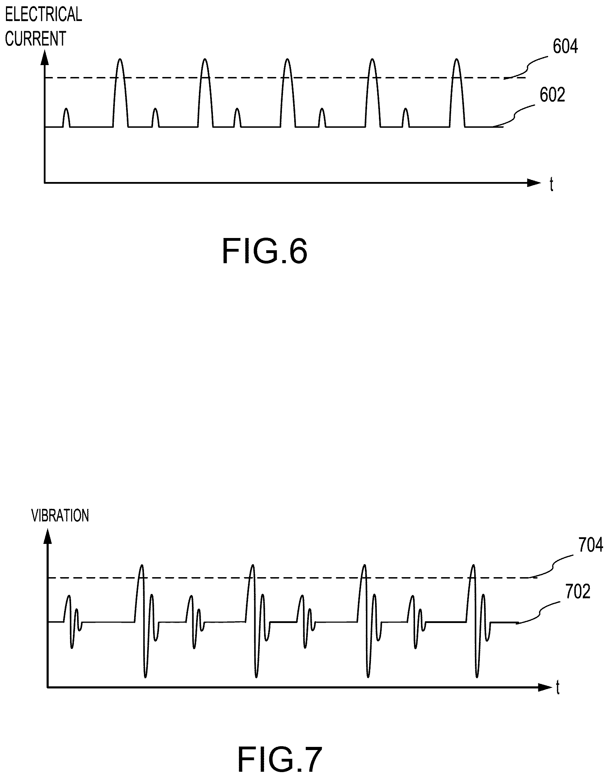

The controller 308 may be electrically coupled to the sensor 304 and may be configured to receive the electrical current information from the sensor 304. With additional reference to FIG. 5, a controller, such as controller 308 of FIG. 3, is illustrated, in accordance with various embodiments. In various embodiments, the controller 308 may include data processing and feature extraction 502, anomaly detection and persistence check 504, and a reporting 506. In various embodiments, the data processing and feature extraction 502 may be configured to analyze the electrical current information and extracts features associated with the electrical current information, e.g. electrical current values utilized by the drive roller 108 over time. With additional reference to FIG. 6, a graph illustrating electrical current values 602 utilized by the drive roller 108 over time is illustrated, in accordance with an illustrative embodiment. In various embodiments, the anomaly detection and persistence check 504 may be configured to analyze the electrical current values utilized by the drive roller 108 over time to determine anomalies associated with the electrical current, e.g. whether the electrical current being utilized during certain times is above a predetermined threshold 604 of FIG. 6 indicating an outer braking rubber layer (i.e., the tire) on the drive roller 108 may be flat or worn thereby causing insufficient and unbalanced traction for the cargo 20. In various embodiments, if the anomaly detection and persistence check 504 identifies an anomaly indicating the electrical current being utilized during certain times is above a predetermined threshold, the reporting 506 may be configured to issue an electric alert signal to, for example, a cargo control system, in order that maintenance may be scheduled in advance to address the damaged tire(s).

Returning to FIG. 3, in various embodiments, sensor 306 may be an accelerometer. In various embodiments, sensor 306 monitors amplitudes of vibrations of the housing 143 of the first PDU 110a. In various embodiment, the sensor 306, which may be electrically coupled to the controller 308, may be configured to provide the vibration information to the controller 308. The controller 308 may be electrically coupled to the sensor 306 and may be configured to receive the vibration information from the sensor 306. With additional reference to FIG. 5, in various embodiments, the data processing and feature extraction 502 may be configured to analyze the vibration information and extracts features associated with the vibration information, e.g. amplitudes of vibration values of the first PDU 110a caused by the rotation of the drive roller 108 over time. With additional reference to FIG. 7, a graph illustrating vibrations values 702 of the housing 143 of the first PDU 110a caused by the rotation of the drive roller 108 over time is illustrated, in accordance with an illustrative embodiment. In various embodiments, the anomaly detection and persistence check 504 may be configured to analyze the amplitudes of the vibration values utilized by the drive roller 108 over time to determine anomalies associated with the vibrations, e.g. whether amplitudes of the vibrations being detected during certain times is above a predetermined threshold 704 of FIG. 7 indicating an outer braking rubber layer (i.e., the tire) on the drive roller 108 may be flat or worn, thereby causing insufficient and unbalanced traction for the cargo 20. In various embodiments, if the anomaly detection and persistence check 504 identifies an anomaly indicating the amplitudes of the vibrations being detected during certain times is above a predetermined threshold, the reporting 506 may be configured to issue an electric alert signal to, for example, a cargo control system, in order that maintenance may be scheduled in advance to address the damaged tire(s).

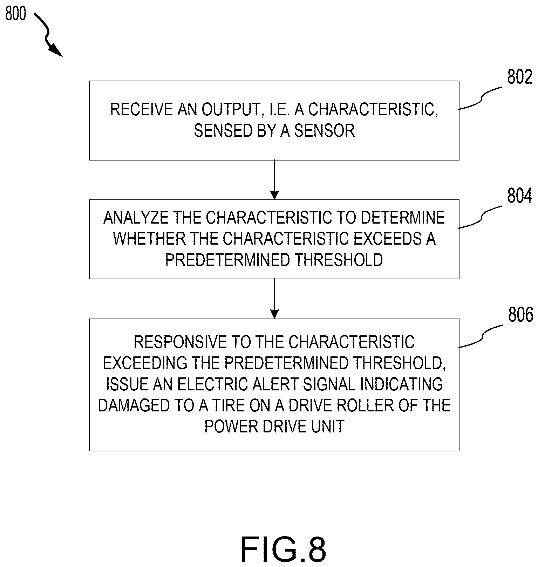

Referring now to FIG. 8, in accordance with various embodiments, a method 800 for monitoring tire degradation of a power drive unit is illustrated. The method 800 may be performed by a controller 308 described above with respect to FIG. 3. At block 802, the controller 308 receives an output, i.e., a characteristic, sensed by a sensor. In various embodiments, the characteristic is associated with one or more of the power drive unit or a motor of the power drive unit. In various embodiments, the sensor is an electrical current sensor, and the electrical current sensor monitors electric current utilized by the motor when driving cargo via the drive roller. In that regard, the characteristic is electrical current utilized by the motor when driving cargo via the drive roller. In various embodiments, the sensor is an accelerometer and the accelerometer monitors vibrations of the power drive unit due to cargo being driven by the drive roller. In that regard, the characteristic is vibrations of the power drive unit due to cargo being driven by the drive roller. At block 804, the controller analyzes the characteristic to determine whether the characteristic exceeds a predetermined threshold. At block 806, responsive to the characteristic exceeding the predetermined threshold, the controller issues an electric alert signal indicating damaged to a tire on a drive roller of the power drive unit. In that regard, the electric alert signal is issued in response to either the electrical current exceeding the predetermined threshold or an amplitude of the vibrations the housing of the PDU exceeding the predetermined threshold.

Accordingly, introducing prognostics and health management (PHM) capability to PDUs, tire degradation may be detected and assessed using the electrical current characteristics and/or vibration characteristics. PHM enables condition-based maintenance (CBM) capabilities to eliminate the potential service interruption caused by undetected tire failure. Meanwhile, PHM may save maintenance cost by replacing the regular inspection with need-based inspection for the tire.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A power drive unit for a cargo handling system, comprising:
a drive roller (108);
a motor configured to rotate the drive roller;
a housing (143) configured to house the motor;
a sensor (304, 306) configured to monitor a characteristic associated with at least one of the housing or the motor; and
a controller (308) configured to receive an output from the sensor and output an electric alert signal in response to the characteristic.

2. The power drive unit of claim 1, wherein the sensor (304, 306) is an electrical current sensor and wherein the electrical current sensor monitors electric current utilized by the motor while driving cargo via the drive roller (108).

3. The power drive unit of claim 1, wherein the characteristic is electrical current utilized by the motor when driving cargo via the drive roller (108); and optionally wherein the electric alert signal is issued in response to the electrical current exceeding a predetermined threshold.

4. The power drive unit of claim 1, wherein the sensor (304, 306) is an accelerometer and wherein the accelerometer monitors vibrations of the housing due to cargo being driven by the drive roller (108).

5. The power drive unit of any preceding claim, wherein the characteristic is an amplitude of vibrations of the housing due to cargo being driven by the drive roller (108); and optionally wherein the electric alert signal is issued in response to the amplitude of the vibrations exceeding a predetermined threshold.

6. The power drive unit of any preceding claim, wherein the electric alert signal provides an indication a damaged tire on the drive roller (108).

7. A cargo handling system, comprising:
a roller tray (104); and
a power drive unit (110) located in the roller tray, the power drive unit comprising:
a drive roller (108);
a motor configured to rotate the drive roller;
a housing (143) configured to house the motor;
a sensor (304, 306) configured to monitor a characteristic associated with at least one of the housing or the motor; and
a controller (308) configured to receive an output from the sensor and output an electric alert signal in response to the characteristic.

8. The cargo handling system of claim 7, wherein the sensor (304, 306) is an electrical current sensor and wherein the electrical current sensor monitors electric current utilized by the motor while driving cargo via the drive roller (108).

9. The cargo handling system of claim 7 or 8, wherein the characteristic is electrical current utilized by the motor when driving cargo via the drive roller (108); and optionally wherein the electric alert signal is issued in response to the electrical current exceeding a predetermined threshold.

10. The cargo handling system of claim 7, wherein the sensor (304, 306) is an accelerometer and wherein the accelerometer monitors vibrations of the housing due to cargo being driven by the drive roller (108).

11. The cargo handling system of any of claims 7 to 10, wherein the characteristic is an amplitude of vibrations of the housing (143) due to cargo being driven by the drive roller (108); and optionally wherein the electric alert signal is issued in response to the amplitude of the vibrations exceeding a predetermined threshold.

12. The cargo handling system of any of claims 7 to 11, wherein the electric alert signal provides an indication a damaged tire on the drive roller (108).

13. A method for monitoring tire degradation of a power drive unit, the method comprising:
receiving, by a controller, a characteristic sensed by a sensor, wherein the characteristic is associated with at least one of a housing of the power drive unit or a motor housed within the power drive unit;
analyzing, by the controller, the characteristic to determine whether the characteristic exceeds a predetermined threshold; and
responsive to the characteristic exceeding the predetermined threshold, issuing, by the controller, an electric alert signal indicating damaged to a tire on a drive roller of the power drive unit.

14. The method of claim 13, wherein the sensor is an electrical current sensor and wherein the electrical current sensor monitors electric current utilized by the motor while driving cargo via the drive roller; or wherein the sensor is an accelerometer and wherein the accelerometer monitors vibrations of the housing due to cargo being driven by the drive roller.

15. The method of claim 13 or 14, wherein the characteristic is either electrical current utilized by the motor when driving cargo via the drive roller or an amplitude of vibrations of the housing due to the cargo being driven by the drive roller and wherein the electric alert signal is issued in response to either the electrical current exceeding the predetermined threshold or the amplitude of the vibrations exceeding the predetermined threshold.
